# EUROPEAN PATENT APPLICATION

(11) **EP 4 844 554 A1**
(43) Date of publication of application: **25.11.2026**
(21) Application number: 25789400.6
(22) Date of filing: 08.04.2025
(51) Int. Cl.: G06F 3/04847

(54) **INTERFACE DISPLAY METHOD, APPARATUS AND SYSTEM DURING EXECUTION OF AUTOMATIC TASK**

(30) Priority: 18.04.2024 CN 202410471782
(71) Applicant: Huawei Technologies Co., Ltd., Shenzhen, Guangdong 518129 (CN)
(72) Inventor: WANG, Wanqiao, Shenzhen, Guangdong 518129 (CN); JIANG, Baohan, Shenzhen, Guangdong 518129 (CN); ZHOU, Xiyu, Shenzhen, Guangdong 518129 (CN)
(74) Representative: Pfenning, Meinig & Partner mbB
(86) International application number: PCT/CN2025/087776
(87) International publication number: WO 2025/218532

(57) **Abstract**

This application provides a method for interface display in an execution process of an automated task, applied to an electronic device including a digital assistant and a display interface. The method includes: The digital assistant receives a user instruction and generates an automated task; the digital assistant executes at least one meta-task, where the at least one meta-task is determined based on the automated task; and at least one identifier is displayed on the display interface, where the identifier represents the meta-task and/or an execution step of the meta-task. During execution of the automated task, a user may observe and understand the execution process of the automated task in real time, and interact with the at least one meta-task in the display interface in real time, to change execution content and an execution process of the meta-task, thereby achieving transparency of task execution and allowing the user to make real-time online modifications, improving user experience and execution efficiency of the automated task.

## Description

### TECHNICAL FIELD

This application relates to the field of computer technologies, and in particular, to a method for interface display in an execution process of an automated task, an apparatus, and a system.

### BACKGROUND

A large AI model has powerful natural language processing capabilities, enabling it to learn language patterns and knowledge from massive amounts of text data. As a result, the large AI model can accurately understand intent-based instructions input by a user and provide responses corresponding to the intent-based instructions. An intelligent device is usually configured with a digital assistant. The user can invoke the digital assistant to execute a series of automated tasks.

When the large AI model is integrated with the digital assistant, the capabilities of the AI model are provided to the digital assistant, thereby equipping the digital assistant with powerful natural language processing capabilities. This enhances usability of the digital assistant, enabling it to automatically understand voice inputs, perform intent understanding, automatically determine task solutions, and then execute automated tasks.

Currently, feedback manners of the digital assistant during execution of an automated task are mainly divided into two types. One manner is to directly feed back a final result page. This manner directly omits an interaction layer between the digital assistant and the user, making it difficult for the user to intervene in the execution process of the automated task, and often failing to meet actual requirements of the user. Another manner is to simulate a user operation process, that is, start an app, and display all action steps by simulating user taps on a screen. This allows the user to clearly view the execution progress of the automated task on the interface. However, this manner poses a risk of exposing user privacy, for example, by accessing historical travel records.

Therefore, how to design a secure and reliable display interface that allows the user to stay informed about an execution progress of an automated task and interact with the automated task is an urgent problem to be addressed.

### SUMMARY

This application provides a method for interface display in an execution process of an automated task by a digital assistant. The digital assistant executes the automated task by receiving a user instruction. The automated task includes at least one meta-task, and the at least one meta-task is determined based on the automated task. In other words, for different automated tasks, meta-tasks determined by the automated tasks are also different. At least one identifier is displayed on a display interface, and the at least one identifier mainly represents the at least one meta-task and/or an execution step of the at least one meta-task. According to the method, a user can view an entire execution process of the automated task on the display interface, and can interact with the display interface in real time, to change or adjust the meta-task or an execution step of the automated task. The method can improve user experience, and a requirement for real-time interaction between the user and the display interface can be met, thereby making execution of the automated task more efficient and meeting a user requirement.

According to a first aspect, this application provides a method for interface display in an execution process of an automated task, applied to an electronic device including a digital assistant and a display interface. The method includes: The digital assistant receives a user instruction and generates an automated task; the digital assistant executes at least one meta-task, where the at least one meta-task is determined based on the automated task; and at least one identifier is displayed on the display interface, where the identifier represents the meta-task and/or an execution step of the meta-task.

In this solution, the digital assistant receives the user instruction, executes the automated task, and determines the at least one meta-task based on the automated task. The digital assistant executes the at least one meta-task and displays the at least one meta-task and the execution step of the at least one meta-task on the display interface. This method for transparently displaying an execution process of the automated task on a user display interface facilitates real-time interaction between a user and the display interface, to adjust or change the meta-task or content of the execution step, thereby improving user experience and meeting a requirement of the user for real-time interaction.

In a possible implementation of the first aspect, each meta-task includes at least one key factor. An identifier of the meta-task is determined based on the at least one key factor. The key factor is at least one of the following: an application icon for invoking an application, and a virtual control in an application interface.

In this solution, the key factor is the application icon for invoking the application and/or the virtual control in the application interface in the automated task. For example, a task of searching for a charging pile generally includes invoking a map app. Therefore, an identifier of corresponding map software may be a key factor, such as identifiers of Baidu Map or Amap. The meta-task may be determined based on at least one key factor.

In a possible implementation of the first aspect, the key factor further includes a generic icon, and the generic icon is a predefined icon.

In this solution, the key factor may also be a customized icon. For example, for some documents, icons of some document types may be used, and for some pictures, identifiers of some picture types may be used. All these are customized. In a possible implementation, a function of a corresponding execution step may further be directly associated based on an icon.

In a possible implementation of the first aspect, during execution of the at least one meta-task, the user interacts with the display interface through at least one of voice and screen touching, to change or replace the at least one meta-task.

In a possible implementation of the first aspect, the method further includes: The display interface further includes a floating window or a widget, and the floating window or the widget is used to display an execution process of a corresponding meta-task.

In this solution, the meta-task and some execution steps in the automated task are displayed on an interface, and some meta-tasks are displayed on the interface in a widget or a floating window. An entire execution process may be displayed, supporting real-time interaction with the user, to change and adjust the meta-task, content displayed on the interface, or information in the execution step, thereby better meeting a user requirement and improving user experience.

In a possible implementation of the first aspect, the at least one meta-task is determined based on at least one of the following: a quantity of invoked apps and a quantity of page jumps.

In this solution, how to determine the meta-task is mainly described. Generally, a quantity of meta-tasks is determined based on the quantity of invoked apps and the quantity of page jumps. In addition, an app may be invoked as a meta-task, and an execution page may also be used as an independent meta-task. In this way, the user can completely and more transparently view the entire execution process of the automated task, meeting a requirement of the user for real-time interaction and change. In addition, in some scenarios, user interaction may guide the digital assistant to better and more efficiently execute another corresponding automated task.

In a possible implementation of the first aspect, the key factor is determined based on the execution step of the meta-task, each meta-task includes at least one execution step, and the at least one execution step jointly implements all functions of the meta-task.

In a possible implementation of the first aspect, the user interacts with the floating window or the widget through at least one of voice and screen touching, to specify or change content in the floating window or the widget.

In this solution, the user may intervene to guide and change a corresponding execution process in real time by implementing interaction, so that execution efficiency of the digital assistant can be effectively improved, an execution process can also be transparent, and supervision and guidance of the user can be received in real time, to obtain a more satisfactory result.

In a possible implementation of the first aspect, the method further includes: A dialog interface of the digital assistant is displayed upon detection of a preset operation for an identifier display area, where the dialog interface includes task description information of the automated task.

According to a second aspect, a method for interface display in an execution process of an automated task is applied to an electronic device including a display interface, and includes: The electronic device receives a user instruction and generates an automated task, where the automated task includes at least one execution action; the electronic device executes the at least one execution action; and at least one identifier is displayed on the display interface, where the identifier indicates an execution action that has been performed or is being performed.

In a possible implementation of the second aspect, the execution action includes at least invoking an app, a page jump, tapping a control, inputting a voice, and typing text.

In a possible implementation of the second aspect, in a process in which the electronic device performs the at least one execution action, a user interacts with the display interface through at least one of voice and screen touching, to change or replace the execution action.

In this solution, this method for transparently displaying an execution process of the automated task on a user display interface facilitates real-time interaction between the user and the display interface, to adjust or change a meta-task or content of an execution step, thereby improving user experience and meeting a requirement of the user for real-time interaction.

In a possible implementation of the second aspect, the method further includes: The display interface further includes a floating window or a widget, and the floating window or the widget is used to display the execution process of the automated task.

In this solution, some execution steps in the automated task are displayed on an interface, and the some execution steps are displayed on the interface in a widget or a floating window. An entire execution process may be displayed, supporting real-time interaction with the user, to change and adjust a meta-task, content displayed on the interface, or information in the execution step, thereby better meeting a user requirement and improving user experience.

According to a third aspect, an electronic device including a display interface is provided, including: a digital assistant, configured to receive a user instruction and generate an automated task, and further configured to execute at least one meta-task, where the at least one meta-task is determined based on the automated task; and a display interface, configured to display at least one identifier, where the identifier represents the meta-task and/or an execution step of the meta-task.

In a possible implementation of the third aspect, each meta-task includes at least one key factor. An identifier of the meta-task is determined based on the at least one key factor. The key factor is at least one of the following: an application icon for invoking an application, and a virtual control in an application interface.

In a possible implementation of the third aspect, the key factor further includes a generic icon, and the generic icon is a predefined icon.

In a possible implementation of the third aspect, during execution of the at least one meta-task, a user interacts with the display interface through at least one of voice and screen touching, to change or replace the at least one meta-task.

In a possible implementation of the third aspect, the method further includes: The display interface further includes a floating window or a widget, and the floating window or the widget is used to display an execution process of a corresponding meta-task.

In a possible implementation of the third aspect, the at least one meta-task is determined based on at least one of the following: a quantity of invoked apps and a quantity of page jumps.

In a possible implementation of the third aspect, the key factor is determined based on the execution step of the meta-task, each meta-task includes at least one execution step, and the at least one execution step jointly implements all functions of the meta-task.

In a possible implementation of the third aspect, a user interacts with the floating window or the widget through at least one of voice and screen touching, to specify or change content in the floating window or the widget.

In a possible implementation of the third aspect, the method further includes: A dialog interface of the digital assistant is displayed upon detection of a preset operation for an identifier display area, where the dialog interface includes task description information of the automated task.

According to a fourth aspect, an electronic device including a display interface is provided, including: The electronic device receives a user instruction and generates an automated task, where the automated task includes at least one execution action; the electronic device executes the at least one execution action; and at least one identifier is displayed on the display interface, where the identifier indicates an execution action that has been performed or is being performed.

In a possible implementation of the fourth aspect, the execution action includes at least invoking an app, a page jump, tapping a control, inputting a voice, and typing text.

In a possible implementation of the fourth aspect, in a process in which the electronic device performs the at least one execution action, a user interacts with the display interface through at least one of voice and screen touching, to change or replace the execution action.

In a possible implementation of the fourth aspect, the method further includes: The display interface further includes a floating window or a widget, and the floating window or the widget is used to display an execution process of an automated task.

According to a fifth aspect, an electronic device having a display interface is provided. The electronic device includes a processor. The processor is coupled to a memory, and the processor is configured to store instructions. When the instructions are executed by the processor, the electronic device is enabled to perform the method according to any one of the first aspect or the second aspect.

According to a sixth aspect, a computer-readable storage medium is provided, including computer instructions. When the computer instructions are run on a computer system, the computer system is enabled to implement the method according to any one of the first aspect or the second aspect.

According to a seventh aspect, a computer program product is provided. The computer program product includes instructions. When the instructions are executed, a computer is enabled to implement the method according to any one of the first aspect or the second aspect.

For beneficial effects of the second aspect to the seventh aspect, refer to the descriptions of the first aspect. Details are not described herein again.

### BRIEF DESCRIPTION OF DRAWINGS

FIG. 1 is a diagram of a central display screen interface of a head unit according to an embodiment;
FIG. 2 is a diagram of an interface for dividing automated tasks based on a key factor according to an embodiment;
FIG. 3A, FIG. 3B, FIG. 3C, FIG. 3D, and FIG. 3E are diagrams of a process in which a digital assistant receives a voice instruction and then executes an automated task according to this embodiment;
FIG. 4 is a diagram of an execution process of an automated task for searching for a charging pile according to an embodiment;
FIG. 5A and FIG. 5B are diagrams of an automated task for ordering a movie ticket online according to this embodiment;
FIG. 6A and FIG. 6B are diagrams of displaying a key factor through a floating widget according to this embodiment; and
FIG. 7A and FIG. 7B are diagrams of an interface for interaction of a user with a key factor according to an embodiment.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that the technical solutions provided in embodiments of this application are also applicable to a similar technical problem with emergence of new application scenarios.

In the specification, claims, and accompanying drawings of this application, the terms "first", "second", and the like are intended to distinguish between similar objects but do not necessarily indicate a specific order or sequence. It should be understood that the descriptions used in such a manner are interchangeable in appropriate situations, so that embodiments can be implemented in another order than the order illustrated or described in this application. In addition, the terms "include", "have", and any variants thereof are intended to cover non-exclusive inclusion. For example, a process, method, system, product, or device that includes a series of steps or modules is not necessarily limited to those clearly listed steps or modules, but may include other steps or modules that are not clearly listed or are inherent to such a process, method, product, or device. Names or numbers of steps in this application do not mean that the steps in the method procedure need to be performed in a time/logical order indicated by the names or numbers. An execution order of the steps in the procedure that have been named or numbered can be changed based on a technical objective to be achieved, provided that same or similar technical effects can be achieved.

Division into units in this application is logical division and may be other division during actual implementation. For example, a plurality of units may be combined or integrated into another system, or some features may be ignored or not performed. In addition, the displayed or discussed mutual couplings, direct couplings, or communication connections may be implemented through some interfaces. The indirect couplings or communication connections between the units may be implemented in electronic or other similar forms. This is not limited in this application. In addition, units or subunits described as separate components may or may not be physically separate, may or may not be physical units, or may be distributed into a plurality of circuit units. Some or all of the units may be selected according to actual requirements to achieve the objectives of the solutions of this application.

For ease of understanding, the following first describes some technical terms used in embodiments of this application.

### (1) Intelligent cabin

The intelligent cabin integrates advanced information technologies and automation systems in a vehicle, implementing upgrades and optimization of an in-vehicle environment and achieving interconnection with an external environment, to provide a higher level of driving experience and ride comfort. This concept encompasses a plurality of aspects, including entertainment for a driver and passengers, information acquisition, vehicle control, and interaction with the external world.

### (2) Digital assistant

The digital assistant is an advanced computer program that usually depends on the Internet to operate and can simulate human-like conversations with a user. The digital assistant can use advanced artificial intelligence (AI), natural language processing, natural language understanding, and machine learning technologies to perform self-learning, thereby providing personalized conversational experience for the user.

### (3) Meta-task

In this embodiment, in an implementation, a task of performing the following steps is a meta-task: finding a target application -> starting the target application -> jumping to a target page, and obtaining information from the target page. In another implementation, a meta-task may be a key phased task in a process of implementing a target task, and all meta-tasks are interlinked, to jointly implement the target task. Therefore, a quantity of meta-tasks is determined based on an automated task. For different automated tasks, because levels of complexity of execution processes of the automated tasks are different, quantities of meta-tasks into which the automated tasks are divided are also different.

### (4) Key factor

In this embodiment, the key factor is an element in an execution step of each meta-task that exerts a decisive impact on subsequent steps and therefore directly affects an application invoked or an application interface navigated to in the subsequent steps. The key factor is usually an application icon for invoking an application or a virtual control in an application interface. Usually, one meta-task may include at least one key factor, and each key factor corresponds to one key execution step.

### (5) Generic icon

In this embodiment, the generic icon is an icon that can be customized by a user in advance, which may be, for example, a text icon, a universal icon representing a picture, an icon representing a document, or the like. A main feature of the generic icon is that a function of a corresponding meta-task may be inferred from the icon.

This application provides a method for interface display in an execution process of an automated task. The method meets a requirement for interacting with a user in a task execution process by displaying an automated task process on an interface. The user may intervene in or indicate task execution by interacting with a digital assistant. This process poses no risk of exposing user privacy and can effectively improve user experience.

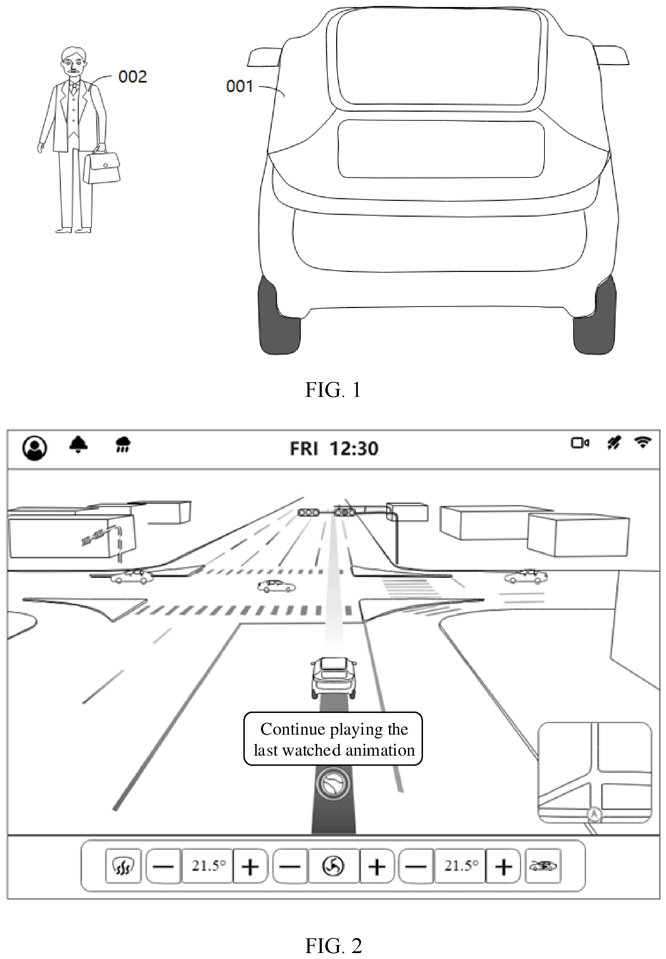

FIG. 1 is a diagram of an architecture of an application scenario according to an embodiment of this application. As shown in FIG. 1, the application scenario includes an electronic device 001 and a user 002. This scenario is mainly used to show an interaction scenario between the electronic device 001 and the user 002. In this embodiment, the electronic device 001 is an intelligent cabin or an intelligent vehicle with a built-in head unit operating system, and a digital assistant may be built in the operating system. The digital assistant may be connected to the cloud through a communication device of a head unit, to invoke a large model capability of the cloud. Alternatively, the digital assistant has a specific large model capability. The user interacts with the digital assistant through a voice, and the like, so that the digital assistant creates an automated task to fulfill an intent expressed by the user and meet a requirement of the user. The user 002 is usually a vehicle owner and interacts with the digital assistant to implement a series of automated operations in a driving process.

In a possible implementation of this embodiment, a display interface is built in the intelligent cabin, and the user 002 interacts with the digital assistant through the display interface.

In another embodiment, the electronic device 001 may alternatively be a terminal device having a display interface and a digital assistant, for example, a mobile phone, a tablet, a computer, a watch, or a robot. The user 002 may interact with the digital assistant through the display interface. The digital assistant has a large AI model capability and may achieve the large model capability by invoking at least one of a cloud-based large model and a built-in large model. The electronic device can invoke the digital assistant on any interface to provide a service. For ease of viewing and setting, an execution process of the automated task is also displayed on the display interface, making it easier for the user 002 to view, intervene manually, and set in real time.

In this implementation solution, the electronic device receives input information, and creates an automated task based on understanding of the input information. Specifically, the electronic device can invoke the digital assistant from any display interface to provide a service. This is because the digital assistant usually resides in a background and in a standby state, and therefore the digital assistant can detect and receive user input in real time. Some digital assistants can also be activated through operations such as voice wakeup, and the activated digital assistant may also attempt to detect and receive the user input, to better provide a service for the user.

In a possible implementation of this embodiment, the digital assistant has a capability to receive the user input. The user may provide the input information through at least one of a voice input and a typed text. For different received input messages, the digital assistant may perform semantic understanding and intent recognition on the input information based on the large model capability, and finally generate a series of automated tasks based on information such as semantics and intents. The automated task usually includes a plurality of steps, and the plurality of steps are usually completed by executing a plurality of computer instructions. The digital assistant can progressively perform each step by generating computer instructions until all steps are completed.

FIG. 1 is a diagram of a central display screen interface of the head unit according to an embodiment. In an application scenario of the head unit, the digital assistant may be displayed on a front-end interface, or may not be displayed on a front-end interface. However, the digital assistant resides in the background, may be woken up through a voice, and may monitor the typed text or the voice input of the front-end in real time. In the application scenario of the head unit, the voice input is commonly used, particularly in the driving process of the user, interaction through the voice input is safer and more convenient. Certainly, for a user waiting at a red light, selecting interaction through the typed text or screen touching is also a possible manner. As shown in FIG. 1, the digital assistant may invoke a microphone to receive the voice input of the user in real time, and the user inputs a voice "Continue playing the last animation". After receiving the voice, the digital assistant creates an automated task to open an animation that is historically played based on intent understanding of input voice information. The execution process of the automated task may be broken down into the following steps:
(1) finding a target application: The digital assistant first executes a meta-task to search for target software. In a process of searching for the target software, the digital assistant selects software preferred by the user based on a preference of the user. For example, the digital assistant may consider selecting target software most frequently used by the user, and then consider play software used by the user last time;
(2) starting the target application: The digital assistant performs an action of opening a playback history page of the found target software based on the found target software; and
(3) executing instructions in the target application: Search the playback history page for a historical record of the last played animation, and perform an action of playing a first video in a history playlist.

The foregoing is an example of a simplest task scenario. The task scenario may be described as three actions/steps in one meta-task, and a next action depends on an execution result of a previous action/step. The digital assistant can complete the automated task through an automated task flow.

However, an intent of the user may be a simple intent or a complex intent. For example, only one application needs to be invoked to achieve a simple intent of the foregoing "Continue playing". However, during achieving the complex intent, the foregoing simple logic is difficult to achieve the user intent, and a plurality of applications are usually required to cooperate to achieve the user intent. In other words, an automated task can be logically broken down into a plurality of meta-tasks, and each meta-task corresponds to an invocation of one application.

It should be noted that the meta-task is a logical concept defined in this embodiment for ease of description. The electronic device actually does not have a concept or definition of the meta-task. When executing the automated task, the electronic device only needs to execute a task step created based on an intent recognition result. Each task step may correspond to one meta-task, and one meta-task may also be executed across task steps.

In a scenario in which the automated task is broken down into the plurality of meta-tasks, for example, in an air ticket booking scenario, an air ticket booking application may not include statistical information such as a flight punctuality rate. Therefore, if the flight punctuality rate is used as a reference factor during air ticket booking, the flight punctuality rate information needs to be obtained through an application that has the statistical information about the flight punctuality rate. In this case, both the air ticket booking application and a flight punctuality rate query application need to be used to complete an air ticket booking task.

Searching for a charging pile in an in-vehicle scenario is used as another example for detailed descriptions. After receiving an input instruction of "Search for a nearby charging pile that supports fast charging and is as inexpensive as possible", the electronic device creates an automated task. The automated task may generally include the following steps:
(1) using a nearby function on a map and selecting charging piles to search for the charging pile;
(2) obtaining fast-charging and price information for all nearby charging piles;
(3) filtering the charging piles that support fast charging and sorting the charging piles based on price, to obtain a plurality of candidate charging piles;
(4) marking the candidate charging piles on the map and then determining a target charging pile; and
(5) setting the target charging pile as a navigation destination and enabling a map navigation function.

In the foregoing steps, except for step 3, which may be determined by artificial intelligence (Artificial Intelligence, AI) or the digital assistant, steps 1, 4, and 5 need to be completed by invoking a map application. However, the map application usually only provides a location positioning function for the nearby charging piles, and does not integrate information about the charging piles, such as fast charging capability and price. Therefore, in step 2, information such as an address of each charging pile on the map needs to be input into a local life application, to query information about each charging pile, such as the fast charging capability and price.

In other words, the automated task includes two meta-tasks. One meta-task is to locate and navigate to the target charging pile on the map, and the other meta-task is to obtain information about the charging pile, such as fast charging capability and price. The first meta-task corresponds to steps 1, 4, and 5, and the second meta-task corresponds to step 2. After step 1 is performed, execution of the first meta-task is suspended, then the second meta-task is started to obtain information such as fast charging capability and price, and after the AI or the digital assistant completes determination in step 3, the first meta-task continues.

This embodiment is intended to enhance transparency of the AI or the digital assistant in the task execution process, allowing the user to understand a key node of an action that is being executed by the AI or the digital assistant. This part of content is usually performed in a black box manner in the conventional technology. To help the user understand the execution process of the automated task, in this embodiment, a key factor of an execution action in an automated task process is displayed to the user, so that the user generally visually understands the execution process of the automated task of the AI or the digital assistant and the action that is being executed.

The execution action may be understood as a more detailed and specific execution operation than task steps of the foregoing automated task that is broken down. For example, starting an application is an execution action, and entering a playback history page from a home page of a video play application is also an action. It may be understood that an execution action corresponds to a simulated click event triggered by the AI or the digital assistant.

Based on this understanding, the key factor of the execution action may also be described as a key factor of the task step, a key factor of the entire automated task, or may be described as a key factor of the meta-task from a perspective of the meta-task. A difference lies in that one execution action corresponds to only one key factor. However, implementing the task step may require one or more actions, and therefore, the task step may correspond to one or more key factors. In contrast, the entire automated task and the meta-task usually have a plurality of key factors.

When displaying key factors, if key factors of all execution actions are displayed, there are too many key factors, which is not conducive to the user quickly obtaining information. Therefore, the key factors can display key nodes and factors of some execution actions. As an example but not limitation, a key factor is displayed for each task step. Specifically, the AI or the digital assistant may determine an importance degree of the execution action and display only a key factor of an execution action with a higher importance degree.

In the following, the key factor is described as the key factor of the task step or the key factor of the meta-task. Each task step may correspond to one or more key factors, and each meta-task may correspond to one or more key factors. The key factor is specifically determined by the task step, the execution action included in the meta-task, and importance of the execution action.

When the AI or the digital assistant executes the automated task, it may be simply understood that the AI or the digital assistant simulates a user performing an operation on an application installed on the electronic device, and finally enters a target page by performing a simulated operation, for example, opening an application or navigating to an interface, to finally obtain target information. In this process, interface navigation and information obtaining are implemented through a simulated tap on a control in an application interface, and the simulated tap constitutes one execution action. However, in the operating system of the electronic device, the simulated tap is usually implemented by simulating a tap event of the control. Therefore, triggering the simulated tap event may also be understood as corresponding to one execution action. An object of the simulated tap is usually the key factor. In other words, the simulated tap object corresponding to a simulated tap event is the key factor. In this embodiment, a process of simulating a tap on an interface or interface navigation remains a black box process and is not displayed to the user, but only the key factor is displayed to the user.

In this embodiment, when the key factor is displayed to the user, an association identifier of the key factor is displayed. The association identifier indicates a corresponding key factor, and the association identifier is displayed on the screen. Therefore, after the key factor is determined, the association identifier of the key factor further needs to be displayed on the screen based on the key factor.

Specifically, after the key factor is determined, the association identifier corresponding to the key factor may be determined based on the key factor. During execution of a step of the automated task, an association identifier of a key factor of a process interface corresponding to the step is displayed. The key factor is usually a control. Therefore, the association identifier may be a thumbnail of an icon corresponding to the control. For example, if an execution action is tapping an application icon to start the application, a key factor corresponding to the execution action is an application icon of the application; and if an execution action is tapping a Playback History control, a key factor corresponding to the execution action is a Playback History control.

Generally, controls may be classified into the following types. A first type is an icon control, and the icon control is mainly displayed on an interface as an icon, for example, a common search control and a return control. A second type is a text control, which indicates a function of the control through text, for example, a common confirm control or a cancel control. A third type is an icon and text type, where text is displayed below an icon, and a common example is an application icon. A fourth type is a file thumbnail type, and common examples include files sent in a chat window and historical video thumbnail windows in a playback history.

When a control corresponding to the key factor includes a graphic file, the graphic file of the control may be extracted from the process interface and used as the association identifier. For example, for the first type, the third type, and the fourth type, if a graphic file exists, the graphic file may be extracted and used as an association identifier. When both the graphic file and the text exist, the graphic file and the text may also be extracted together, and a graphic and text layout of a display style of the key factor in the process interface is used as the association identifier. For example, an application name is below an application icon, and a graphic of the application name displayed at the bottom of the application icon may be used as an association identifier.

For the text control, the text may also be extracted as the association identifier. However, in comparison with the graphic, the text cannot help the user quickly understand the text. Therefore, for the text control, a preset generic icon may be used to indicate the association identifier, or a generic icon cooperates with a graphic style of the text extracted from the control to indicate the association identifier. Specifically, when the generic icon is selected, the generic icon may be selected based on a function tag corresponding to the control. For example, for a control of a setting type, a generic icon of the setting type is used, and for a control of a video type, a generic icon of the video type is used.

After the association identifier of the key factor is displayed on an interface, the user can interact with the association identifier to intervene in automated task execution. For example, when an association identifier of a key factor is an application icon, the user may tap the application icon, and the AI or the digital assistant displays an application icon of a similar application type on an interface based on an operation, and selects a different application icon to replace another application to play a historical record video.

To reflect continuity of the automated task, a displayed association identifier remains displayed before one automated task is completed, and association identifiers of key factors are sequentially displayed based on an automated task step execution sequence. Therefore, displaying the association identifier can help the user understand a real-time task progress of the digital assistant and support the user in setting and intervening in the task execution process according to an actual requirement.

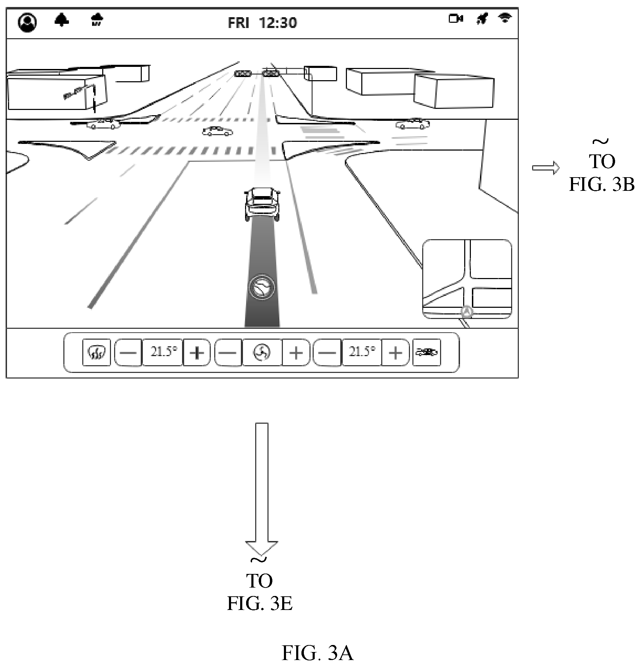

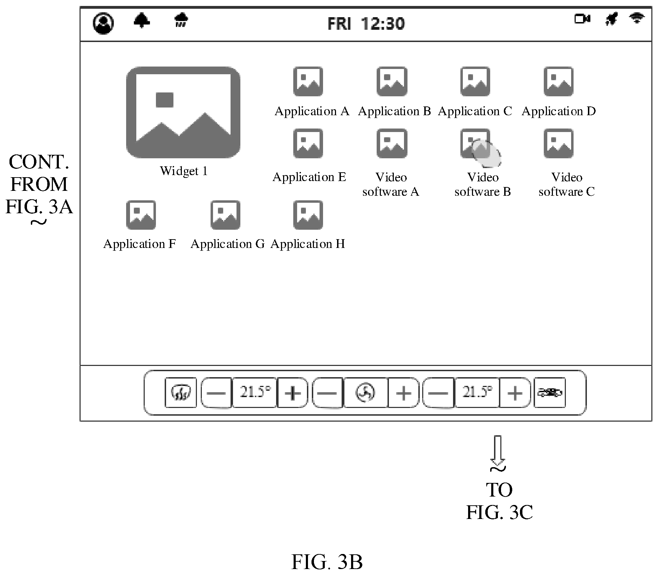

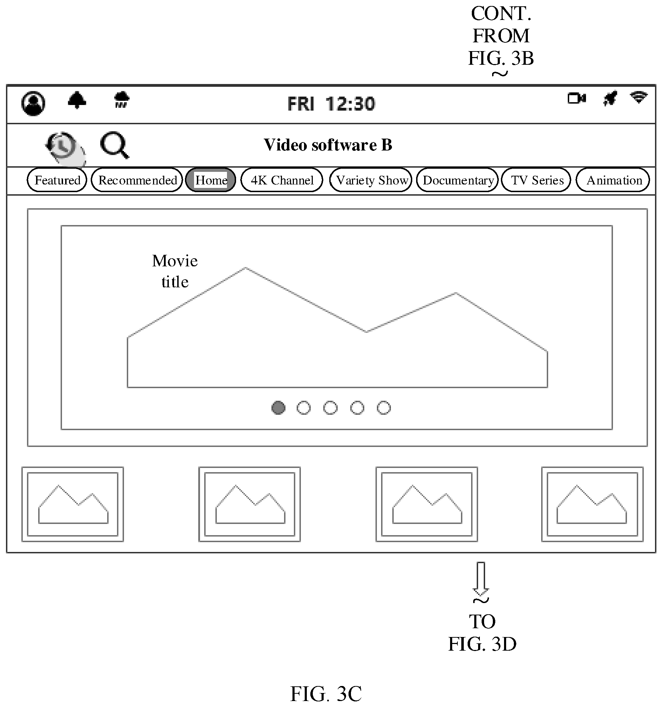

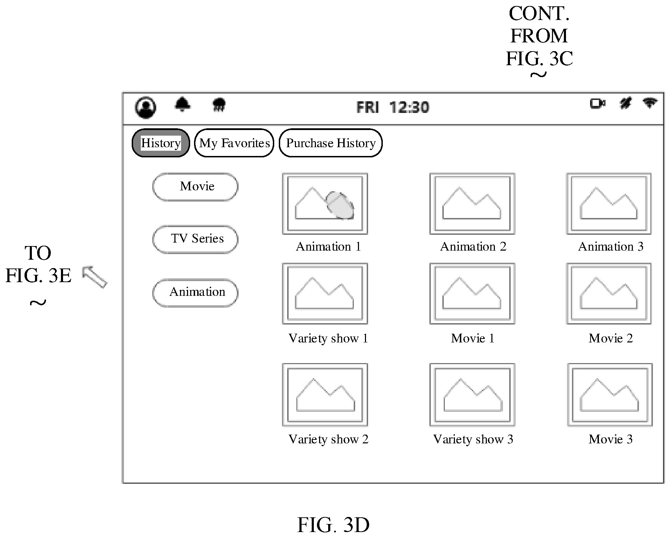

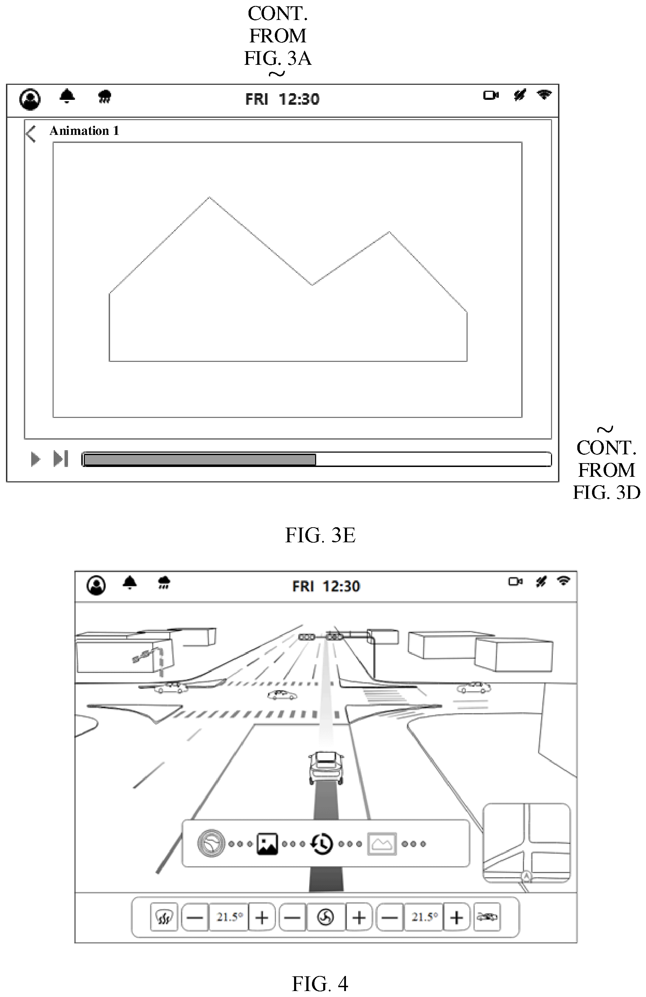

FIG. 2 and FIG. 3A, FIG. 3B, FIG. 3C, FIG. 3D, and FIG. 3E show all process interfaces for executing the foregoing "Continue playing" automated task. FIG. 2 shows an embodiment of an automated task in which a voice instruction "Continue playing the last watched animation" is received on an autonomous driving interface of the head unit. FIG. 3A, FIG. 3B, FIG. 3C, FIG. 3D, and FIG. 3E shows sequential jumps between all interfaces. FIG. 3A displays an initial interface, namely, the autonomous driving interface, on which a voice instruction input by the user is received by the head unit. The autonomous driving interface displays a road that is being traveled, surrounding vehicles, a traveling model of an ego vehicle on the road, and some building facilities and real-time traffic conditions around the traveled road section, with a floating window for real-time map navigation provided in a lower right corner. FIG. 3B displays a home screen on which an icon of a video application B is selected and tapped, which corresponds to the task step of finding the target application in the foregoing steps. The interface mainly displays application icons and a widget, and the interface includes a widget 1, and icons of an application A, an application B, an application C, an application D, an application E, a video software A, the video software B, a video software C, an application F, an application G, and an application H. FIG. 3C displays a home interface after entry into the video application B. In the interface, a "movie title" indicating a recommended movie is displayed. A sliding control is further included at a position of the recommended movie displayed on the home page, and the sliding control supports the user in viewing recommended movies and television programs by sliding. Some recommended movie and television works are displayed in the middle area of the video software B interface. In addition, some other movies, television series, and entertainment programs are displayed in the lower area. Moreover, a "History" control and a "Search" control for navigating to a history page and a resource search page respectively are displayed in the top area of the interface. Below the two controls is a row of page selection controls for different categories, including Featured, Recommended, Home, 4K Channel, Variety Show, Documentary, TV Series, and Animation. Each control represents a category of data information. For example, when the Variety Show control on the current home interface is tapped, the current interface transitions to a variety show-related display interface that supports the user in sliding up and down to select a variety show that the user needs and likes. FIG. 3C corresponds to the foregoing steps of starting the target application and opening the playback history page, and shows both the home page after start of the video software B and an operation of tapping the History control. FIG. 3D displays a playback history interface of the video application B, and a My Favorites control and a Purchase History control are parallel to a Playback History control, supporting the user in selecting different controls according to different requirements. Certainly, three categories of information are displayed on the current playback history interface: movie, TV series, and animation. When no selection is made among the three categories, playback history of all the categories is displayed on the interface. As shown in the figure, animation 1, animation 2, animation 3, movie 1, movie 2, movie 3, variety show 1, variety show 2, and variety show 3 are displayed. After entry into the page, a latest played animation is tapped to open a playing interface, namely, an interface in FIG. 3E.

FIG. 3A, FIG. 3B, FIG. 3C, FIG. 3D, and FIG. 3E shows all execution process interfaces of the automated task. However, during actual screen display, an actual screen display change only includes a transition from FIG. 3A to FIG. 3E, and transitions from the interface in FIG. 3B to interface in FIG. 3D are a black-box execution process.

FIG. 4 shows a display interface of association identifiers of key factors of the "Continue playing" automated task in FIG. 2 and FIG. 3A, FIG. 3B, FIG. 3C, FIG. 3D, and FIG. 3E. The following association identifiers are sequentially displayed: an association identifier corresponding to a key factor in FIG. 3B, namely, the application icon of the video software B, where the association identifier is a graphic file included in the application icon of the video software B; an association identifier corresponding to a key factor in FIG. 3C, namely, the History control, where the association identifier is a graphic file included in the History control; and an association identifier corresponding to a key factor in FIG. 3D, namely, a thumbnail window of a recently played video, where the association identifier is a thumbnail of the thumbnail window of the video.

FIG. 4 is an example of applying this embodiment to an intelligent cabin scenario. During driving, the user inputs a real-time voice instruction, and the digital assistant receives the voice instruction, performs intent understanding and analysis, and then divides the automated task to obtain a plurality of task steps. Each task step corresponds to only one execution action. Therefore, each task step also corresponds to one key factor. After the key factors are determined, an association icon corresponding to each key factor is further displayed on the current interface (FIG. 4 shows an autonomous driving interface). Therefore, the user's requirement for perceiving and interacting with the entire execution process of the automated task is met. As shown in FIG. 4, the current interface displays original interface information such as real-time traffic conditions and surrounding building facilities during traveling of the current vehicle, and also displays an association icon corresponding to each key factor. The association icon indicates an execution action of the automated task corresponding to the key factor.

In FIG. 4, association identifiers corresponding to the key factors are displayed, and each association identifier of a key factor also represents one execution action of the automated task. In addition, the association identifiers of the key factors are arranged in an order in which the corresponding execution actions are performed. In FIG. 4, three execution actions are required to complete the task. Therefore, association icons of three key factors are displayed.

In some embodiments, in addition to the association identifiers of the key factors, an interface widget of a process interface corresponding to an automated task step that is being executed may be displayed on a screen. The interface widget may be a thumbnail view of the process interface corresponding to the execution action, or may be some interface elements in the process interface. Common scenarios for displaying an interface widget include: a scenario in which a process interface is an interface of seat selection for a train ticket/movie ticket/flight, and a scenario in which a process interface is a navigation destination selection interface.

In execution processes of some automated tasks, although many solutions may be automatically determined based on user preferences in many scenarios, there are some scenarios in which it is difficult to determine solutions based on preferences. In this case, manual intervention of the user is required. Therefore, an interface widget may be provided, so that the user can interact with the interface widget to determine a solution, or observe the interface widget and then make an input via voice interaction to obtain an input result. As a result, the automated task continues to be executed.

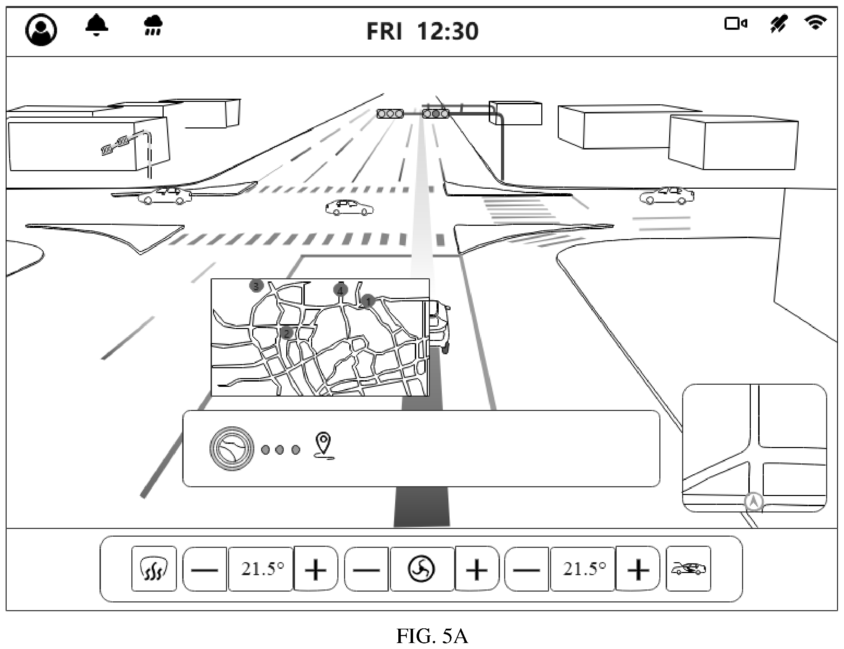

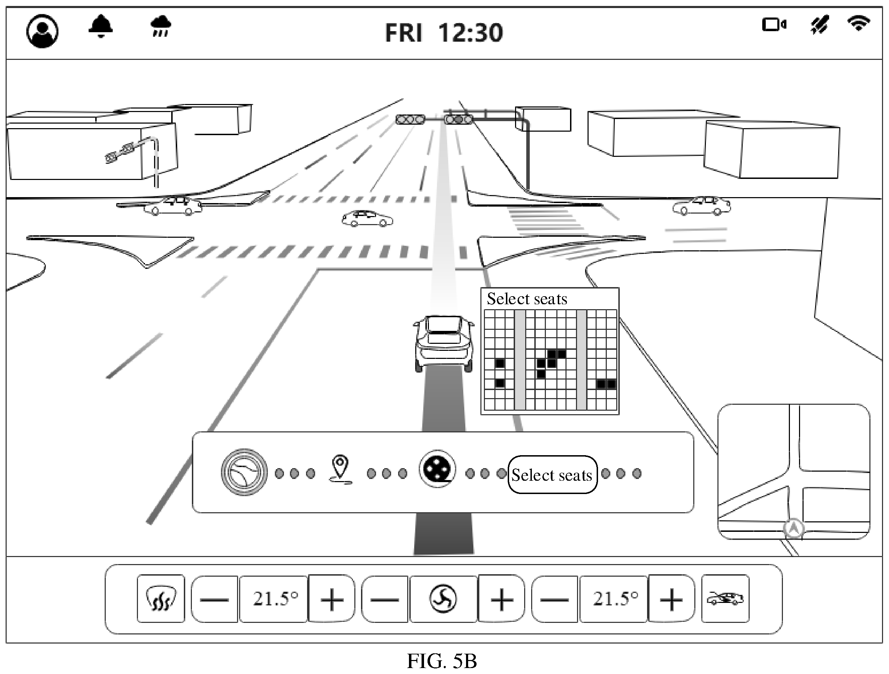

FIG. 5A and FIG. 5B separately shows interfaces in which interface widgets are displayed in two classic scenarios: navigation destination selection and cinema seat selection. FIG. 5A shows a screen interface present when execution of an automated task proceeds to an execution action of destination selection, and FIG. 5B shows a screen interface present when execution of an automated task proceeds to an execution action of cinema seat selection.

In FIG. 5A, a current execution action is selecting a navigation destination based on a destination obtained by parsing a user input. When the user has not visited the vicinity of the destination or has visited the vicinity of the destination only a few times, it is difficult to determine a preference based on a historical record. In addition, if the destination is a relatively large area, different navigation destinations may be far away from each other, and selection of an incorrect destination may result in poor user experience. In this case, user intervention is required to help complete the execution action. Therefore, the interface widget is provided in the interface. The interface widget displays a navigation destination selection page of a map application or a part of the navigation destination selection page, and the user may be notified via a voice prompt "Select a destination" to intervene. After a user input, for example, "the destination numbered 1" is received, the automated task continues to be executed. After the user input is received, the interface widget may not display. In other words, after the execution action corresponding to the interface widget is completed, the interface widget is no longer displayed on the screen. In FIG. 5A, the interface widget is displayed above an association identifier. In another example, the interface widget may be displayed below the association identifier, or may be displayed at another position on the screen.

Similarly, in FIG. 5B, when an automated task process interface is a cinema seat selection interface, a corresponding execution action is seat selection. When a seat selection identifier is displayed on an interface as a key factor, an interaction element (for example, a seat selection widget) corresponding to the seat selection in a ticket purchasing software interface is extracted and displayed on the screen in a widget. In other words, the interface widget is obtained and displayed on the current interface.

In the foregoing real-time manner, in a cinema seat selection scenario, when the seat selection identifier is displayed on the interface as the key factor, the interaction element (for example, a seat selection widget) corresponding to the seat selection in the ticket purchasing software interface is extracted and displayed on a display interface in a widget, to obtain an interface widget.

When an association identifier is displayed on the current interface, the association identifier is displayed on an upper layer of the current interface in a floating manner. In an implementation, with reference to FIG. 4 and FIG. 5A and FIG. 5B, a floating widget or a floating tray is displayed on the current interface, and the association identifier is displayed on the floating widget or the floating tray, to prevent content of the current interface from affecting the user viewing the association identifier.

In some implementations, a dialog interface of an AI/digital assistant is displayed by interacting with an area displaying a key factor on a screen, and the dialog interface displays information about task steps executed by the AI/digital assistant. For example, an association identifier may be displayed on a floating widget or a floating tray, and when a slide-up gesture is performed near a display area of the floating widget, a dialog interface of the AI/digital assistant is displayed. Certainly, the dialog interface of the AI/digital assistant may also be displayed on the screen through another gesture operation, a voice input, or the like.

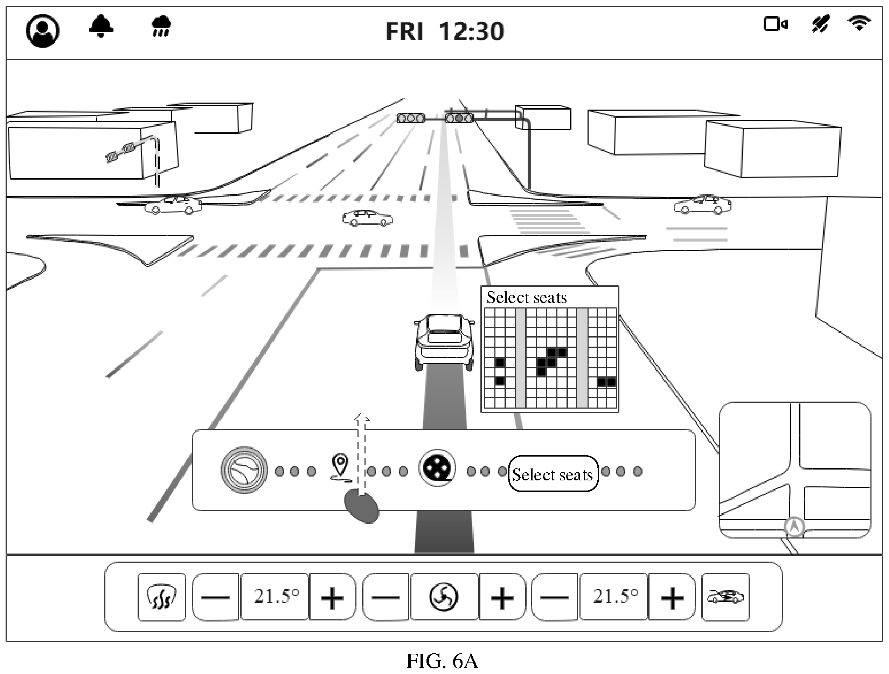

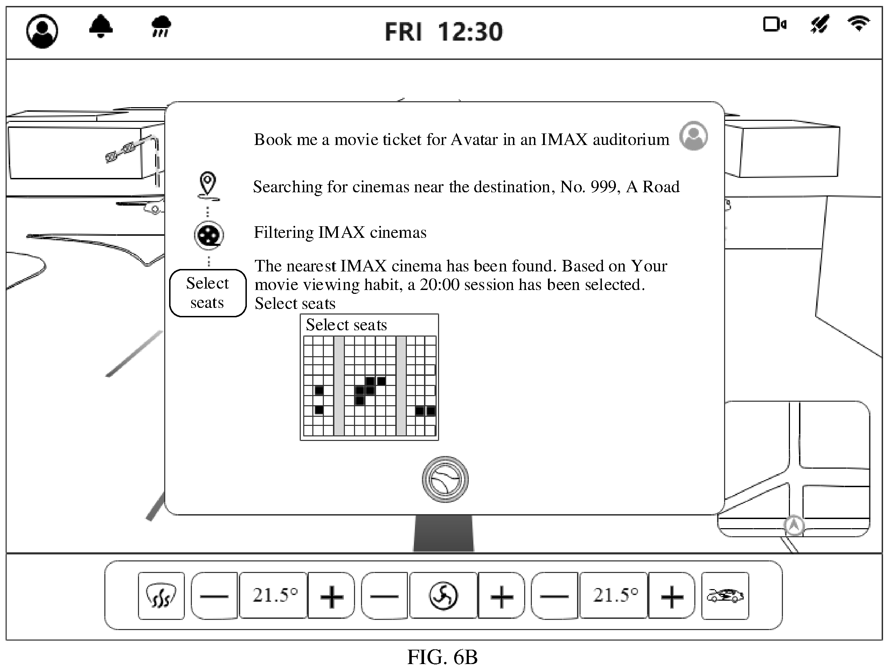

FIG. 6A and FIG. 6B are diagrams of displaying the key factor through a floating widget according to an embodiment. This embodiment is mainly used to show that the key factor can be displayed through the floating widget. When sliding up is performed at any position of the floating widget, the floating widget expands into a dialog widget, displaying a complete dialog process in the dialog widget. Corresponding task step description information is displayed for each execution step of an automated task of the digital assistant, and a corresponding key factor is displayed preceding the task step description information in the dialog interface. Each key factor corresponds to one execution step, and a plurality of key factors indicate a task process that has been executed or is being executed.

FIG. 6A shows an execution process of an entire cinema seat selection, including (from left to right in sequence): a digital assistant identifier (a first identifier on the far left) and an association identifier (a map identifier, a cinema identifier, and a select seat identifier). The digital assistant receives a voice input by a user and performs semantic understanding and analysis on the voice of the user, to obtain the following process (the process herein is a simple example, and a specific process is obtained based on analysis by the digital assistant): Firstly, a current position is located, and a map application is invoked to search for a nearby cinema, to find a cinema that meets a user requirement; then, a movie ticket purchasing application is started to select a corresponding movie and a play time period, and a movie session to be ordered is determined; and then a ticket purchasing interface is entered to select a seat. In FIG. 6A, each of three task steps corresponds to an association identifier of a key factor. From a perspective of a meta-task, a first association identifier is an association identifier of a key factor of a meta-task corresponding to invoking the map application, and a second association identifier and a third association identifier are association identifiers of key factors of a meta-task corresponding to invoking the ticket purchasing application. After the slide-up gesture is performed on the floating widget in FIG. 6A, the dialog interface in FIG. 6B is obtained.

FIG. 6B shows an ongoing dialog process for movie ticket booking. As shown on the interface, the user first inputs voice "Book me a movie ticket for Avatar in an IMAX auditorium"; a corresponding digital assistant identifier displays a voice message "Searching for cinemas near the destination, No. 999, A Road"; a meta-task corresponding to the map identifier displays a voice message "Filtering IMAX cinemas"; and the meta-task corresponding to the seat selection identifier displays a voice message "The nearest IMAX cinema has been found. Based on your movie viewing habit, a 20:00 session has been selected. Select seats." During execution of the meta-task, the digital assistant may play a voice message. Task step information displayed on the floating window interface may be text corresponding to the played voice message. The task step information may describe an execution step corresponding to each key factor through the dialog interface.

In an implementation of this embodiment, an association identifier of a key factor supports interaction. Because there is a mapping relationship between the association identifier and the key factor, a key factor of a task execution step can be directly changed by interacting with an association identifier, and the key factor is replaced with an element of a same type in a process interface. Firstly, a correction input from the user should be allowed to be received on a display interface, a target step is determined based on the correction input from the user, an updated key factor of the target step is determined based on the correction input, and an identifier corresponding to the key factor of the target step is changed. The target step may be a step that has been executed or is being executed. In this manner, the user can intervene in an automated task step that is being executed or has been executed by a digital assistant through the correction input, so that the automated task can be changed in real time based on a user intent. The change includes, but is not limited to: changing a key factor of a step and adding one or more steps, for example, changing a file to be sent, and using other video software to continue a playing task. In this embodiment, the correction input refers to at least one of detecting a preset input, detecting a voice input, or detecting a screen touching input acting on the key factor.

In a possible implementation of this embodiment, the user may implement correction by directly interacting with the key factor. The user may tap the key factor on the screen to adjust an execution step or an execution action corresponding to the key factor. Certainly, in addition to tapping, the preset input may also be another common gesture, for example, touch and hold, or swipe. After the preset input is performed on the key factor, because the preset input is a key factor that directly acts on a step, an execution step or an execution action corresponding to the key factor is a target step. After detecting the preset input, an electronic device displays another key factor of a same type in a process interface/application on the interface, so that the user replaces another key factor to perform a task in this step.

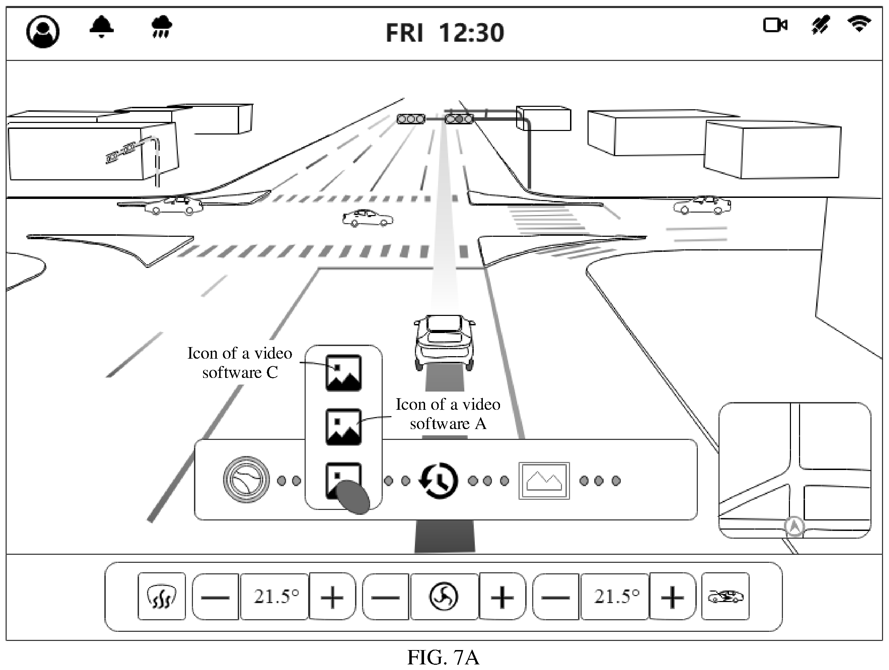

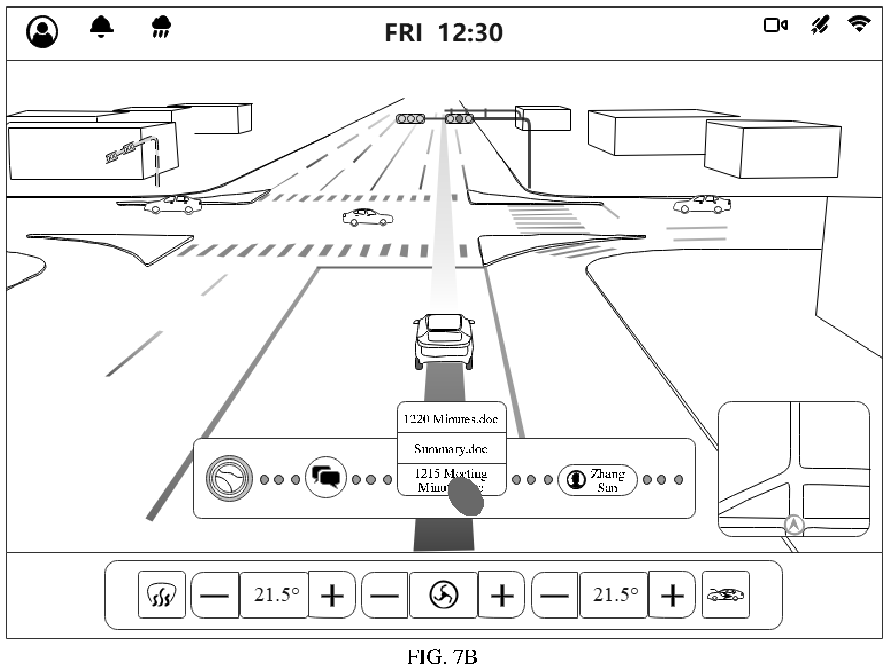

FIG. 7A and FIG. 7B are diagrams of an interface for interaction of a user with a key factor according to an embodiment. Continuing playing the animation in FIG. 7A is used as an example. During execution of an automated task, a video software B is automatically selected based on a user preference to execute the task of continuing playing the animation. In this case, if the user taps a first key factor, a process interface corresponding to the key factor is a home screen. Therefore, a same type of application icons are found on the home screen (if there are a plurality of screens, application icons on the plurality of screens, that is, data of an entire desktop application may be searched), and a total of three application icons with a "video software" tag are found: a video software A, a video software B, and a video software C. An icon of the video software B is already displayed on the screen. Therefore, the electronic device simultaneously displays an icon of the video software A and an icon of the video software C on the home screen for the user to select for replacement. For example, after tapping, a same type of key factors are displayed in a list. In addition, the same type of application icons may be further sorted, for example, sorted based on a preference such as usage duration.

FIG. 7B shows an automated task of sending a file in group A to Zhang San, where a latest file in a chat history is sent by default. In a step of searching for a file, the latest file "1215 Meeting Minutes.doc" is a key factor. When the user expects for replacement, the user taps the key factor, and a same type of files in the chat history of the group A are searched for. That is, files in the group chat history are searched for, and the files are expanded and displayed in a list on a screen.

In one solution, if no key factor of the same type is found, a process interface is displayed on the screen in a floating window. For example, during execution of a corresponding step of, for example, seat selection when booking a movie ticket, or viewing History/My Favorites to continue playing a last watched video, a corresponding key factor is unique in the process interface. In this case, the key factor has no element of a same type in the process interface or even in the application, the process interface is displayed on the screen in a floating window. The process interface may be completely displayed, or may be only partially displayed.

In a possible implementation, during execution of the automated task, the user may further modify, through a voice input, a step that is being executed or has been executed. In the execution process of the automated task, after the voice input is received, semantic understanding is first performed, a target step is then determined based on the semantic understanding, and the target step is re-executed based on the latest semantic understanding. Correspondingly, subsequent steps are also re-executed. A corresponding key factor also needs to be re-determined, and an association identifier of the new key factor is displayed.

Specifically, when making a change through the voice input, the user usually directly indicates a to-be-replaced key factor. For example, in the foregoing example of continuing playing a last watched video, the user may directly provide a voice input "Do not start video software B, start video software A" or "Start video software A", and the key factor is directly changed from an icon of the video software B to an icon of the video software A based on semantic understanding. If the to-be-replaced key factor is not identified in the semantic understanding, with reference to a processing scheme for screen interactive input, another key factor of a same type in the process interface/application is displayed on the interface, or a floating window of the process interface is displayed. A change in the key factor usually causes a change in a subsequent step. Therefore, if a key factor of a completed step is changed, the automated task usually needs to be re-executed starting from the step, and a key factor of a subsequent step is accordingly changed (for example, from a history icon of the video software B to a history icon of the video software A). For an automated task that is being executed (not yet completed), if a modification input is detected, execution of the automated task is interrupted.

In a possible implementation, before the user completes a change, a corresponding step is already completed. Therefore, such a short-range conflict generally exists in two scenarios. A first scenario is that an automated task is executed at a high speed, causing the entire automated task to be completed before the user completes the change. A second scenario is that a key factor changed by the user is a key factor of a last step of a last meta-task, in which case the automated task is also very likely to be completed before the user completes the change. Therefore, there are two solutions to the short-range conflict:
① After execution of the automated task is completed, before transition from a current interface to a result interface, the transition may be first interrupted, and the user may be prompted to transition to the result interface. For example, in the example of continuing playing the animation, the user is prompted with, "The first video of the animation category in the playback history of the video software A is about to play. Do you want to switch to the video software A?" If the user expects to replace a video software, the change may be made with reference to the manner in the foregoing embodiments. If the user expects to play the video directly, the user may directly reply with "Yes".
② After execution of the automated task is completed, transition to a result interface is immediately performed. After the transition is completed, display of a key factor is maintained for preset duration (for example, after the result interface is displayed, the key factor remains displayed for 10s), allowing the user to modify the executed automated task. The change may be made with reference to the manner in the foregoing embodiments.

The foregoing embodiment describes a schematic flowchart in which the digital assistant executes the automated task by dividing the automated task in different scenarios. However, this embodiment covers implementation of all automated tasks. Examples are not enumerated herein.

Some functions or features described in the foregoing embodiments may be implemented by using software, some may be implemented by using hardware, and some may be implemented by using a combination of software and hardware or firmware. When the software is used to implement embodiments, all or some of embodiments may be implemented in a form of a computer program product.

The computer program product includes one or more computer instructions. When computer program instructions are loaded and executed on a computer, all or some of the procedures or functions according to embodiments of this application are generated. The computer may be a general-purpose computer, a dedicated computer, a computer language, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

## Claims

1. A method for interface display in an execution process of an automated task, applied to an electronic device comprising a digital assistant and a display interface, and comprising:
receiving, by the electronic device, a user instruction, and generating an automated task;
executing, by the electronic device, at least one meta-task, wherein the at least one meta-task is determined based on the automated task; and
displaying at least one identifier on the display interface, wherein the identifier represents the meta-task and/or an execution step of the meta-task.

2. The method according to claim 1, wherein each meta-task comprises at least one key factor, an identifier of the meta-task is determined based on the at least one key factor, and the key factor is at least one of the following: an application icon for invoking an application, or a virtual control in an application interface.

3. The method according to claim 2, wherein the key factor further comprises a generic icon, and the generic icon is a predefined icon.

4. The method according to claim 1, wherein during execution of the at least one meta-task, a user interacts with the display interface through at least one of voice and screen touching, to change or replace the at least one meta-task.

5. The method according to claim 1, the display interface further comprises a floating window or a widget, and the floating window or the widget is used to display an execution process of a corresponding meta-task.

6. The method according to claim 1, wherein the at least one meta-task is determined based on at least one of the following: a quantity of invoked apps and a quantity of page jumps.

7. The method according to any one of claims 2 to 6, wherein the key factor is determined based on an execution step of the meta-task, each meta-task comprises at least one execution step, and the at least one execution step is used to jointly implement all functions of the meta-task.

8. The method according to claim 5, wherein the floating window or widget is configured to specify or change content contained therein in response to user interacts.

9. The method according to claim 1, further comprising:
upon detection of a preset operation for an identifier display area, displaying a dialog interface of the digital assistant, wherein the dialog interface comprises task description information of the automated task.

10. A method for interface display in an execution process of an automated task, applied to an electronic device comprising a display interface, and comprising:
receiving, by the electronic device, a user instruction, and generating an automated task, wherein the automated task comprises at least one execution action;
performing, by the electronic device, the at least one execution action; and
displaying at least one identifier on the display interface, wherein the identifier indicates an execution action that has been performed or is being performed.

11. The method according to claim 10, wherein the execution action comprises at least invoking an app, a page jump, tapping a control, inputting a voice, and typing text.

12. The method according to claim 10, wherein in a process in which the electronic device performs the at least one execution action, a user interacts with the display interface through at least one of voice and screen touching, to change or replace the execution action.

13. The method according to claim 10, the display interface further comprises a floating window or a widget, and the floating window or the widget is used to display an execution process of the automated task.

14. An electronic device comprising a display interface, comprising:
a digital assistant, configured to receive a user instruction and generate an automated task, and further configured to execute at least one meta-task, wherein the at least one meta-task is determined based on the automated task; and
the display interface, configured to display at least one identifier, wherein the identifier represents the meta-task and/or an execution step of the meta-task.

15. The electronic device according to claim 14, wherein each meta-task comprises at least one key factor, an identifier of the meta-task is determined based on the at least one key factor, and the key factor is at least one of the following: an application icon for invoking an application, and a virtual control in an application interface.

16. The electronic device according to claim 15, wherein the key factor further comprises a generic icon, and the generic icon is a predefined icon.

17. The electronic device according to claim 14, wherein during execution of the at least one meta-task, a user interacts with the display interface through at least one of voice and screen touching, to change or replace the at least one meta-task.

18. The electronic device according to claim 14, the display interface further comprises a floating window or a widget, and the floating window or the widget is used to display an execution process of a corresponding meta-task.

19. The electronic device according to claim 14, wherein the at least one meta-task is determined based on at least one of the following: a quantity of invoked apps and a quantity of page jumps.

20. The electronic device according to any one of claims 14 to 19, wherein the key factor is determined based on an execution step of the meta-task, each meta-task comprises at least one execution step, and the at least one execution step jointly implements all functions of the meta-task.

21. The electronic device according to claim 18, wherein the floating window or widget is configured to specify or change content contained therein in response to user interacts..

22. The electronic device according to claim 14, further comprising:
a dialog interface of the digital assistant is displayed upon detection of a preset operation for an identifier display area, wherein the dialog interface comprises task description information of the automated task.

23. An electronic device comprising a display interface, comprising:
the electronic device receives a user instruction and generates an automated task, wherein the automated task comprises at least one execution action;
the electronic device performs the at least one execution action; and
at least one identifier is displayed on the display interface, wherein the identifier indicates an execution action that has been performed or is being performed.

24. The electronic device according to claim 23, wherein the execution action comprises at least invoking an app, a page jump, tapping a control, inputting a voice, and typing text.

25. The electronic device according to claim 23, wherein in a process in which the electronic device performs the at least one execution action, a user interacts with the display interface through at least one of voice and screen touching, to change or replace the execution action.

26. The electronic device according to claim 23, further comprising: the display interface further comprises a floating window or a widget, and the floating window or the widget is used to display an execution process of an automated task.

27. An electronic device having a display interface, comprising a processor, wherein the processor is coupled to a memory, the processor is configured to store instructions, and when the instructions are executed by the processor, the electronic device is enabled to perform the method according to any one of claims 1 to 9 or claims 10 to 13.

28. A computer-readable storage medium, comprising computer instructions, wherein when the computer instructions are run on a computer system, the computer system is enabled to implement the method according to any one of claims 1 to 9 or claims 10 to 13.

29. A computer program product, wherein the computer program product comprises instructions, and when the instructions are executed, a computer is enabled to implement the method according to any one of claims 1 to 9 or claims 10 to 13.
